# EUROPEAN PATENT APPLICATION

(11) **EP 2 921 934 A1**
(43) Date of publication of application: **23.09.2015**
(21) Application number: 14161108.7
(22) Date of filing: 21.03.2014
(51) Int. Cl.: G06F 3/00, G06F 3/01, G06F 3/03, G06K 9/20, G06K 9/00

(54) **Display device with gesture recognition**

(71) Applicant: TP Vision Holding B.V., 1097 JB Amsterdam (NL)
(72) Inventor: Seynaeve, Dirck Michel, B-8000 Brugge (BE)
(74) Representative: Busch, Patrick

(57) **Abstract**

A display device (11) comprising a display (12) and means for receiving a video or image input signal (14) and for displaying video or images on the display, a light source (13) for generating light in response to the input signal, means for recognizing a gesture made by a user and for operating the display device in response to the gesture, means for deriving an indication signal indicating if an ambient illumination level meets a level required for enabling the gesture recognition by the recognition means and means for detecting the initiation of gesture control by a user, characterized in that the display device is arranged to increase a level of light generated by the light source in response to the detection of the initiation of gesture control in case the indication signal indicates that the level required for enabling gesture recognition is not met.

## Description

### FIELD OF THE INVENTION

The present invention relates to display devices suitable for gesture control.

### BACKGROUND OF THE INVENTION

In recent years gesture control has been applied to digital flat display devices. Such a display device may be equipped with a camera for video communication purposes, and that camera can be used to register gestures made by a user, which are then interpreted and linked to commands to control the display device. This can take the form of gestures indicating specific commands like 'channel up' or 'mute sound'. Gesturing can be used to control a pointer or highlight in an on-screen menu and thus select items or functions from the menu. These mechanisms may also be applied in other consumer products such as home theater systems, or Blu-ray players.

For the gesture recognition to work properly, the lighting conditions must be sufficient so the camera can capture the gestures accurately enough. This becomes a problem when users watch display device in a poorly lit room, which many users like to do. In such conditions the camera may not receive sufficient light to capture sufficient quality images, and the gesture recognition may fail to function properly.

WO2013166223 A2 describes a media system equipped with gesture recognition where external lamps in the room are controlled via a lighting control system, for example based on ZigBee or some similar protocol. When the lighting in the room is insufficient for gesture recognition, the lamps will be switched on. A disadvantage is that this solution forces lamps to be on, which some users may not like. It also requires a lighting control infrastructure which some users may not have available, and which comes at a cost.

### SUMMARY OF THE INVENTION

It is an object of the invention to reduce one or more of the above problems. This is achieved by a display device according to the preamble of claim 1, characterized in that the display device is arranged to increase a level of light generated by the light source in response to the detection of the initiation of gesture control in case the indication signal indicates that the level required for enabling gesture recognition is not met. This has the advantage that gesture control can operate even in very dark conditions, without adding extra cost and without requiring unwanted room illumination.

In embodiments of a display device according to the invention the light source is comprised by the display, and the display device is arranged to increase the level of the light source by increasing a display drive level, or by adding a brightness offset to the images or video being displayed, or by adding a bright object to the images or video being displayed. The advantage of these embodiments is that the extra light is generated by the display which is present in the television anyway and therefore requires no additional cost.

In another embodiment of a display device according to the invention the light source comprises an Ambilight source, and the display device is arranged to increase the level of the light source by increasing an Ambilight level. In further embodiments this may be achieved by adding an offset to the Ambilight level, or by increasing a gain in the Ambilight level. The advantage of these embodiments is that the extra light is generated by the Ambilight source which is present in the television anyway and therefore requires no additional cost. Also, it causes minimal disturbance to the user.

In another embodiment the means for recognizing a gesture made by a user comprise a camera, and in a further embodiment the means for detecting the initiation of gesture control by a user comprise the camera. Both have the advantage that a camera is used that may be present in the display device already for video communication purposes, so it can be used at no extra cost.

In another embodiment of the invention the display device is arranged to operate the camera in a low-light setting for detecting the initiation of gesture control by a user, and in a normal setting for recognizing the gesture made by the user. This has the advantage that gesture detection can be performed in very low illumination conditions, even if the gesture recognition cannot. This allows the disturbance to the user to be kept to a minimum.

### BRIEF DESCRIPTION OF THE DRAWINGS

Further embodiments of the device according to the invention and the advantages thereof will be apparent from and elucidated further with reference to the accompanying drawings, in which
Fig. 1 shows a user controlling a display system with gestures;
Fig. 2 shows a system diagram of a display system with gesture control.

### DETAILED DESCRIPTION OF EMBODIMENTS

The following description focusses mainly on embodiments of the invention applied in a television. However, it must be appreciated that the invention is not limited television alone, but extends to other types of display devices, such as monitors or tablets.

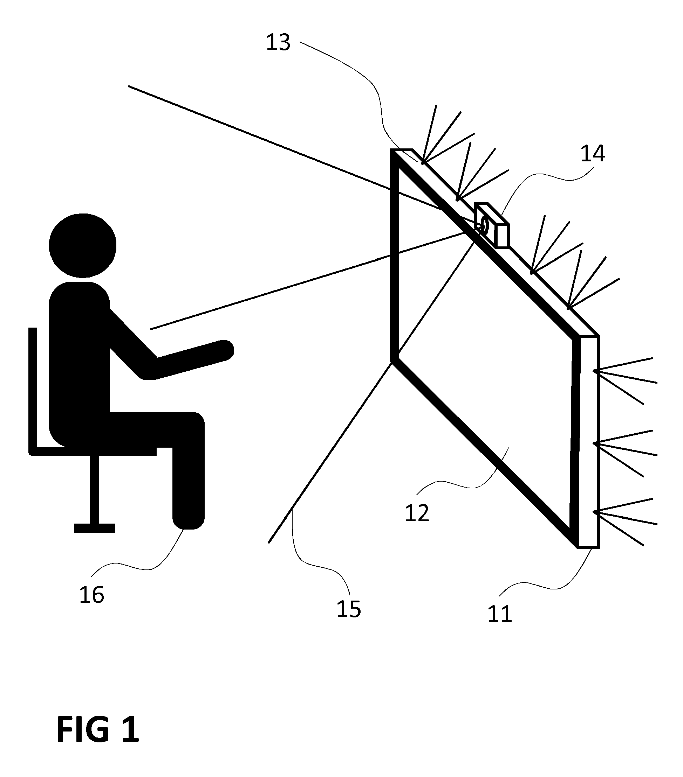

Figure 1 shows a user 16, seated in front of a television 11. This television is equipped with a display 12, and with light sources 13 for Ambilight effects. Ambilight is a feature where background light is projected on the surroundings of the television, such as a wall, in response to the video or image content shown on the display of the television, such as described in EP1379082 B1. The Ambilight feature is not required for all embodiments of the invention.

The television in Figure 1 is further equipped with a camera 14, which may be used for various application, including video communication. The camera may be mounted on top of the television as shown in the figure, or it may be built-in, or it may even be separate from the television being connected to it by wire or wirelessly. In this example the camera 14 is also used for gesture control of the television. To this end the user 16, seated within the field of view 15 of the camera 14, makes gestures that are captured by the camera. These gestures commonly involve motions made by the user with a hand, but other possibilities exist. As an example, a user may open his hand to start controlling a pointer or highlight shown on the display, and move that pointer by moving his hand to point it at an object such as a graphical user interface element like a button, and then close the hand to select or activate that element. This is similar to an action that may be performed with a pointer device such as a computer mouse. Many other gesture possibilities exist, for example up and down motions with a hand may signify an increase or decrease of the television sound volume setting, or horizontal swipe motions may signify channel changes. Gestures may also involve two hands, or arms, or just fingers. This control by gestures is in itself well-known, and provides an alternative to the use of a conventional hand-held remote control operated with buttons. Generally, the gestures are recognized by the system through analysis of captured video images, in which in the above example a hand may be recognized and its motions may be tracked and translated into appropriate commands to operate the television.

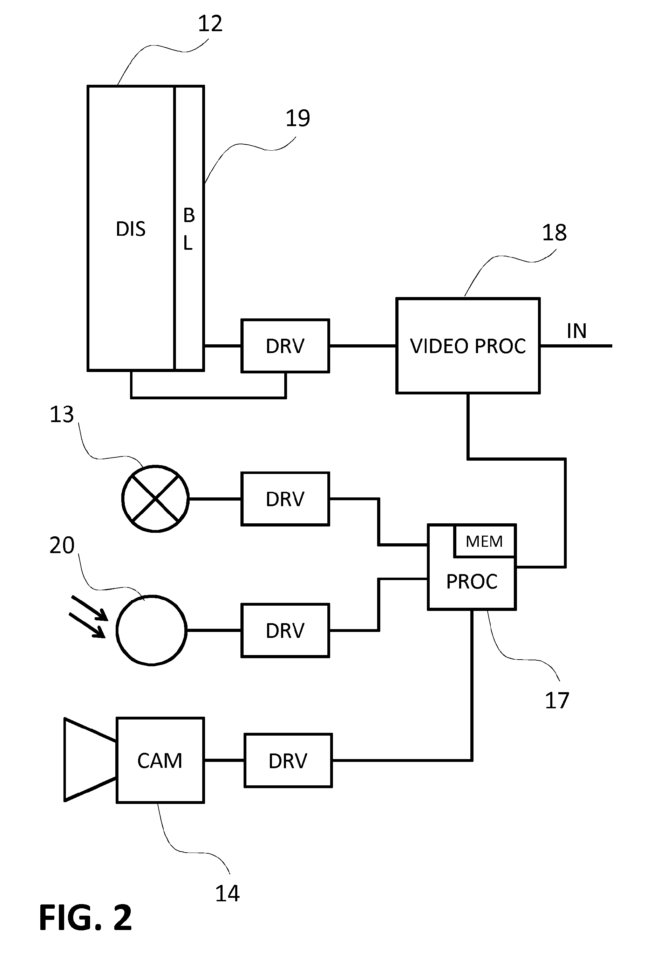

Figure 2 shows an example of a system diagram representing a display device or television such as shown in Figure 1. It shows a display 12, and in case of an LCD display may include a backlight 19. The display is driven by a driver, and a video processor 18 processes the video or images received at the input for presentation on the display. The system in controlled by a processor 17, commonly with memory. Also shown are a camera 14, one or more Ambilight light sources 13, and an ambient light detector 20, each with its own driver to enable control from the processor 18. The function of the ambient light detector 20 is to detect the level of ambient illumination in which the television operates. This is used to adapt the video an display levels to the condition, and is a common feature in televisions and other display devices. For example the display may need to produce a much brighter picture for watching a football match on a sunny afternoon than for watching a film on a dark evening.

A set-up as presented in Figures 1 and 2 may work well in favourable light conditions, in which the camera may adequately capture the motions made by the user. The inventors have noticed, however, that some users prefer to watch television in a dark room with no other illumination than the television itself, possibly equipped with Ambilight. In such cases the camera may not be able to capture images well enough to enable recognition of the user's gestures, and the gesture control will fail. It is of course possible to provide additional light sources that may be switched on in unfavourable conditions for gesture control, but that has the advantage of adding extra cost to the system, and also it may be against the desire of the user to watch television in a dark room.

The inventors have realised that instead of adding additional external light with the disadvantages as mentioned above, the light sources available in the television or display device itself may be used to generate the small amount of extra light that is required to enable gesture recognition and thereby gesture control. This may be achieved by use of the display or by use of Ambilight means, both being light sources that normally produce light in response to an input signal of the display device representing video or image data. These may be caused to produce an amount of extra light, and the inventors have found that a relatively small amount is sufficient in practical cases. The display may be caused to generate extra light by adding a small offset to the video or image signal or the display drive signal, by increasing the gain in the video signal, or in case of an LCD display by increasing the backlight drive signal. It is also possible to add bright objects to the content displayed on the display, or to make certain objects brighter than normal. Similarly, the Ambilight means may be driven with a small offset or a small extra gain in order to produce the small amount of extra light required.

Of course these ways of generating extra light, even if it is a small amount, are just noticeable to the user - even if much less disturbing than switching on external lamps. Also, small offsets and increases in video gain may adversely affect the overall picture quality to some extent. The inventors have realised that it is therefore desirable to activate these extra light generating measures only when the user wants to use gesture control, in which case the small effects will be less disturbing, or not at all.

To that end, it is necessary to be able to detect the initiation of gesture control by the user, even without the help of additional light that may be generated by the display or Ambilight. The inventors have realised that here it is sufficient to detect a gesture, not recognize it, and that this may be done with less available light. For example, in case a camera is used for gesture recognition, it may be used in a setting for low light to enable gesture detection. This may include a higher sensitivity and a longer integration time in the capturing of images. With such settings or processing, it may no longer be possible to accurately track a gesture, but it will be possible to recognize for example a held up hand marking the start of a gesture.

Once the initiation of gesture control by the user has been detected, the extra light generation as described above may be activated to enable the gesture recognition by the camera operating in normal mode. This need only be done if it has been established that the light conditions do not meet the level required to enable proper gesture recognition without the extra illumination. That indication may for example be derived from the signal strength obtained from the camera in combination with the settings used. It may also be derived by using an ambient light detector as described above. Such a detector is commonly present in a television, so it can be used at no extra cost.

In normal operation the television may be continuously ready to detect the initiation of gesture recognition, adjusting the camera settings and processing to low light conditions if necessary. Once the initiation of a gesture is detected, the extra light generation in any of the ways described above may be activated for as long as needed for the gesture recognition.

Although several embodiments of the present invention have been illustrated in the accompanying drawings and described in the above detailed description, it will be understood that the invention is not limited to the embodiments disclosed, but is capable of numerous modifications without departing from the scope of the invention as set out in the following claims.

## Claims

1. A display device (11) comprising
- a display (12) and means for receiving a video or image input signal and for displaying video or images on the display,
- a light source for generating light in response to the input signal,
- means for recognizing a gesture made by a user and for operating the display device in response to the gesture, and
- means for detecting the initiation of gesture control by a user, **characterized in that**
- the display device further comprises means for deriving an indication signal indicating if an ambient illumination level meets a level required for enabling the gesture recognition by the recognition means, and that
- the display device is arranged to increase a level of light generated by the light source in response to the detection of the initiation of gesture control in case the indication signal indicates that the level required for enabling gesture recognition is not met.

2. A display device according to claim 1, where the light source is comprised by the display (12), and where the display device is arranged to increase the level of the light source by increasing a display drive level.

3. A display device according to claim 1, where the light source is comprised by the display (12), and where the display device is arranged to increase the level of the light source by adding a brightness offset to the images or video being displayed.

4. A display device according to claim 1, where the light source is comprised by the display (12), and where the display device is arranged to increase the level of the light source by adding a bright object to the images or video being displayed.

5. A display device according to claim 1, where the display (12) is an LCD display, the light source comprises a backlight (19) of the LCD display, and the display device is arranged to increase the level of the light source by increasing a backlight drive level of the LCD display.

6. A display device according to claim 1, where the light source comprises an Ambilight source (13), and where the display device is arranged to increase the level of the light source by increasing an Ambilight level.

7. A display device according to claim 6, arranged to increase the Ambilight level by adding an offset to the Ambilight level.

8. A display device according to claim 6, arranged to increase the Ambilight level by increasing a gain in the Ambilight level.

9. A display device according to any of the previous claims, where the means for recognizing a gesture made by a user comprise a camera (14).

10. A display device according to claim 9, where the means for detecting the initiation of gesture control by a user comprise the camera (14).

11. A display device according to claim 10, where the display device is arranged to operate the camera (14) in a low-light setting for detecting the initiation of gesture control by a user, and in a normal setting for recognizing the gesture made by the user.

12. A display device according to any of the previous claims, where the means for deriving an indication signal comprise a sensor (20) for measuring an ambient light level.

13. A display device according to any of claims 1 to 11, where the means for deriving an indication signal comprise means for analysing a camera signal to detect whether the required level is met.
